# EUROPEAN PATENT APPLICATION

(11) **EP 1 736 924 A1**
(43) Date of publication of application: **27.12.2006**
(21) Application number: 06115536.2
(22) Date of filing: 15.06.2006
(51) Int. Cl.: G06Q 30/00

(54) **Methods for measuring latency in a multicast environment**

(30) Priority: 15.06.2005 US 152956
(71) Applicant: Cinnober Financial Technology AB, 112 46 Stockholm (SE)
(72) Inventor: Asplund, Johan, 182 50, Danderyd (SE)
(74) Representative: Pierrou, Mattias

(57) **Abstract**

The present invention relates to methods, systems, computer readable medium and a computer program product for measuring latency in computer systems, such as electronic trading systems. The method for measuring latency in a computer network system (10, 20) communicating with a plurality of clients (12a, 12b, 12c) by means of multicasting via a communication network (25), the system (10, 20) comprising a sending host (21) including a sending application (23) adapted to distribute messages to a receiving application (35) of a receiving host (22) of a client (12a, 12b, 12c), is characterized by the steps of: providing (40) a message to be sent from the sending application (23) to the receiving application (3) with a time stamp indicating the point of time the message was sent; transferring (42) the message together with the time stamp from a multicast framework (27) of the sending host (21) to a multicast framework (29) of the receiving host (22); extracting (44) the time stamp from the message when the message is received by a receiving application (35) of the receiving host (22); and comparing (46) the point of time indicated by the extracted time stamp with a current time of the receiving host (22) in order to calculate a latency for the message.

## Description

### TECHNICAL AREA

The present invention generally relates to computer networks using multicast techniques such as electronic trading systems for trading stocks, bonds, futures, options and other financial instruments as well as betting and e-gaming, and in particular to methods, systems, computer readable mediums and computer program products for such systems.

### BACKGROUND OF THE INVENTION

During the last decade, almost all the world's exchanges and marketplaces have introduced electronic trading systems. These systems either replace the traditional trading floors or are used as complements to them. Today a large number of exchanges throughout the world utilizes electronic trading to trade stocks, bonds, futures, options and other financial instruments. These electronic exchanges generally includes three basic components, namely server computers (host), communication servers, and the exchanges participants' computers (client). The host constitutes, so to speak, the heart of the electronic trading system. The hosts operations includes, for example, order-matching, maintaining order books and positions or price information. Participants, e.g. traders, are capable of communicating with the host by means of high speed data lines, high speed communications servers and the Internet. Thus, the traders can participate in the market by means of the clients communicating with the host.

A fundamental property of such financial messaging networks is the ability to deliver information from one sender, for example, the host, to a large number of recipients, for example, the clients. This introduces the need for multicasting technologies in order to avoid the high bandwidth requirements that would be the result of a plurality of point-to-point connections (i.e. sending the message once for each recipient).

One important quality measure in a transaction-oriented environment, such as an electronic trading system, is the latency of transactions, i.e. the length of time (usually measured in seconds or milliseconds) between the point of time the message was submitted for publishing by a sending application to the point of time that particular message was received by the receiving application. Or in other words, the travelling time for the message from the sender to the receiver. This is often expressed as an average latency (e.g. 50 milliseconds) for a large number of transactions, or as a confidence interval (95% of the transactions have a latency of less than milliseconds). In order to measure the latency, the time the transactions was sent and the time it was received must be compared. The latency is calculated as the difference between these two points of time. If the processing times in the sending and receiving applications are negligible, the latency is approximately the same as the network latency, i.e. the period of time required for transferring one message (transaction) from the sending host to the receiving host.

However, if the nature of the communication protocol adds waiting times in the sender and/or the receiver, the network latency is not a good approximation of the perceived latency for the entire transaction. A "reliable multicast" protocol is especially susceptible to waiting times since messages may be queued while waiting for re-transmission in order to maintain a reliable, gap-free, stream of messages.

Thus, there is need of an improved method and system for measuring latency in a more reliable and accurate way in such multicast system.

### SUMMARY OF THE INVENTION

An object of the present invention is to provide an improved method and system for measuring latency in a more reliable and accurate way in such multicast system.

This and other objects are achieved according to the present invention by providing a system, a method, a computer program, and a computer readable medium having the features defined in the independent claims. Preferred embodiments are defined in the dependent claims.

In the context of the present invention, the term "latency" refers to a period of time (usually measured in seconds or milliseconds) between a message being submitted for publishing by the sending device until the same message is received by the receiving device.

In connection with this application, the term "reliable multicast" refers to a mechanism where a message is broadcasted to a multiple recipients at the same time, but where the implementation also guarantees that all messages reach the recipients in due order and without gaps.

According to a first aspect of the present invention, there is provided a method for measuring latency in a computer network system communicating with a plurality of clients by means of multicasting via a communication network, which system comprises a sending host including a sending application adapted to distribute messages to a receiving application of a receiving host of a client. The method is characterized by the steps of providing a message to be sent from the sending application to the receiving application with a time stamp indicating the point of time the message was sent; transferring the message together with the time stamp from a multicast framework of the sending host to a multicast framework of the receiving host; extracting the time stamp from the message when the message is received by a receiving application of the receiving host; and comparing the point of time indicated by the extracted time stamp with a current time of the receiving host in order to calculate a latency for the message.

According to a second aspect of the present invention, there is provided a system for measuring latency in a computer network system communicating with a plurality of clients by means of multicasting via a communication network, which system comprises a sending host including a sending application adapted to distribute messages to a receiving application of a receiving host of a client. The system is characterized in that the sending host comprises a multicast framework including a message generating means adapted to generate a message to be sent from the sending application to the receiving application having a time stamp indicating the point of time the message was sent, wherein the framework is adapted to send the message together with the time stamp to a multicast framework of the receiving host; and the receiving host comprises latency calculating means adapted to extract the time stamp from the message when the message is sent to the receiving application; and compare the point of time indicated by the extracted time stamp with a current time of the receiving host in order to calculate a latency for the message.

According to third aspect of the present invention, there is provided a computer program product, which when executed on a computer, performs the method according to the first aspect of the present invention.

According to a further aspect of the present invention, there is provided a computer readable medium comprising instructions for bringing a computer to perform the method according to the first aspect of the present invention.

Thus, the invention is based on the idea of identifying when a message actually is sent from the sending application of the sending host and, on the receiving end, identifying when the same message actually is received by the receiving application. Thereby, it is possible to obtain a good approximation of the total latency for a message, i.e. the network latency as well as the latency caused by waiting times in the sending queue and the receiving queue. This can be achieved by providing selected messages with time stamps, which time stamps can be used to calculate the total latency. Accordingly, the solution according to the present invention provides a reliable and accurate measure of the total latency in comparison with the conventional technique where, in practice, only the network latency is measured since the waiting times for a message cannot be estimated in a reliable way. Messages can be queued in the sender before transmission and can also be queued in the receiver while waiting for re-transmission to fill a "gap" in the sequence where a previous message has been lost. The time spent in these queues depends on, inter alia, the network bandwidth and the quality of the network as well as performance of the sending host and the receiving host. Consequently, another advantage of the present invention is that it is possible to obtain a approximation of the latency that is not affected by network parameters such as the network bandwidth, the quality of the network or the performance of, for example the sending host and the receiving host. A good approximation of the latency provides a useful information for configuration of, e.g. the multicast framework and the network. For example, whether the network bandwidth should be changed or whether the queue sizes of the sender queue and the receiver queue should be changed, etc. Another advantage with the present invention is that the latency can be measure without any substantially increase in processing load due to the fact that only selected messages are provided with time stamps. That is, the calculation of the latency is only performed on these selected messages.

In a preferred embodiment of the present invention, heartbeat messages are injected into the same message stream as the application messages are used. Thus, these heartbeat messages are subjected to queuing in the sender and the receiver. Moreover, they are also sequence-numbered, which entails that if a heartbeat message is lost in the network it will be subject to gap detection and re-transmission in the same way as regular (application) messages. In fact, the message processing logic in the frameworks is unaware of the message content and does not treat heartbeats differently than other messages. In one embodiment, the heartbeat messages are sent out at regular intervals, for example, one each second.

According to an embodiment, an internal clock of the sending host and an internal clock of the receiving host are synchronized. Alternatively, a time difference between the internal clock of the sending host and the internal clock of the receiving host can be regularly measured. Thereby, it is possible to obtain a very good approximation of the latency.

As realized by the person skilled in the art, the methods of the present invention, as well as preferred embodiments thereof, are suitable to realize as a computer program or a computer readable medium.

The features that characterize the invention, both as to organization and to method of operation, together with further objects and advantages thereof, will be better understood from the following description used in conjunction with the accompanying drawings. It is to be expressely understood that the drawings is for the purpose of illustration and description and is not intended as a definition of the limits of the invention. These and other objects attained, and advantages offered, by the present invention will become more fully apparent as the description that now follows is read in conjunction with the accompanying drawings.

### SHORT DESCRIPTION OF THE DRAWINGS

In the following description of an embodiment of the invention, reference will be made to the accompanying drawings of which:
- Fig. 1: is a general view of a conventional electronic trading system in which the present invention may be implemented;
- Fig. 2: shows schematically a sending host and a receiving host of a multicast environment according to an embodiment of the present invention;
- Fig. 3: shows schematically the general principles of the method for measuring latency in a multicast environment according to the present invention; and
- Fig. 4: shows schematically another embodiment of the present invention.

### DETAILED DESCRIPTION OF THE INVENTION

In the following there will be discussed preferred embodiments of the method and system for measuring latency in a computer network using a multicasting service, such as an electronic trading system. As the skilled man realizes, the invention can be implemented in any computer network employing a multicasting technology even if the invention in the context of this application is described as being implemented within the contents of an electronic trading system.

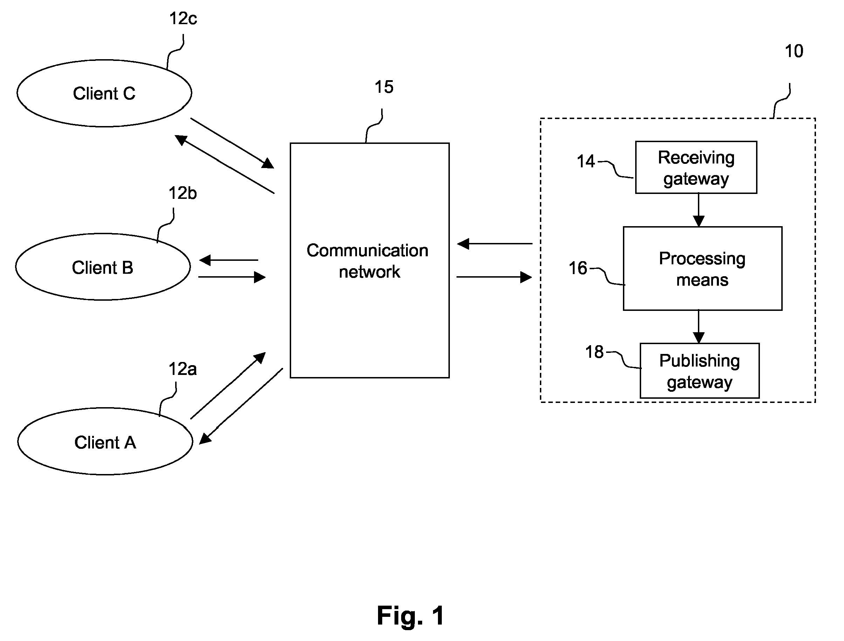

With reference first to Fig. 1, a conventional electronic trading system in which the present invention can be implemented will be discussed. A number of clients, here indicated by client A 12a, client B 12b, and client C 12c, communicate with the trading or exchange system 10. Thus, traders can participate in the market by means of the clients 12a-12c communicating with the exchange system 10 via a communication network 15. The clients 12a-12c may link to the system 10 via high speed data lines, high speed communication servers, or the Internet. High speed data lines establish direct connection between a client and the system. Connection can also be established between the client and the system by configuring high speed networks or communication servers at strategic access points in locations where traders physically are located. Internet is a third communication means enabling traders, using, for example, the clients 12a-12c, can communicate using, for example, high speed data lines connected to the Internet. Hence, traders are allowed to be located anywhere they can establish a connection to the Internet.

The system 10 comprises a receiving gateway 14 arranged to receive incoming messages or transactions, for example, an order to buy a stock at a defined price from the clients 12a-12c. Thereafter, the transactions are sent by the receiving gateway 14 to a processing means 16 containing business logic where the transactions are processed in accordance with the logic. The results are, in turn, sent further on to a publisher gateway 18, which publishes the results. The functions and design of the processing means, as well a the receiving gateway and the publisher gateway, are not described in further detail herein as they are well known to the man skilled within the art. The publisher gateway 18 may, for example, be adapted to send messages containing results of a processed incoming transaction from one clients 12a-12c back to all the clients 12a-12c. This kind of communication with the clients is preferably performed by means of a multicasting technology, which will be explained in more detail hereinafter.

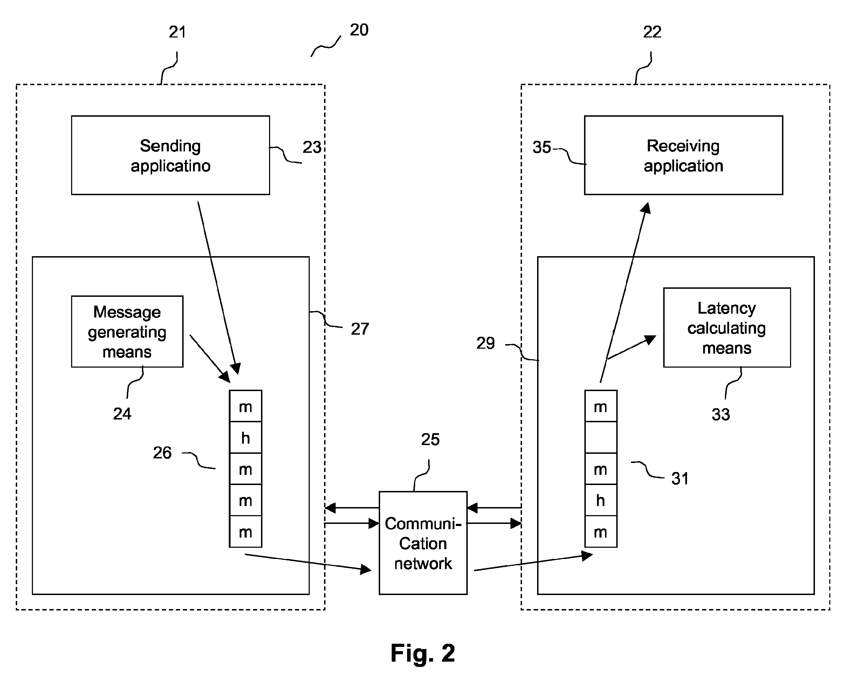

Turning now to Fig. 2, one embodiment of system for measuring latency in a multicast environment according to the present invention will be described. The system 20 comprises at least one sending host 21 and at least one receiving host 22 communicating via a communication network 25. The system 20 may be an electronic trading system such as that described above with reference to Fig. 1, the sending host 21 may be a publishing means such as that described above with reference to Fig. 1 and the receiving host 22 may be located at a client 12a-12c.

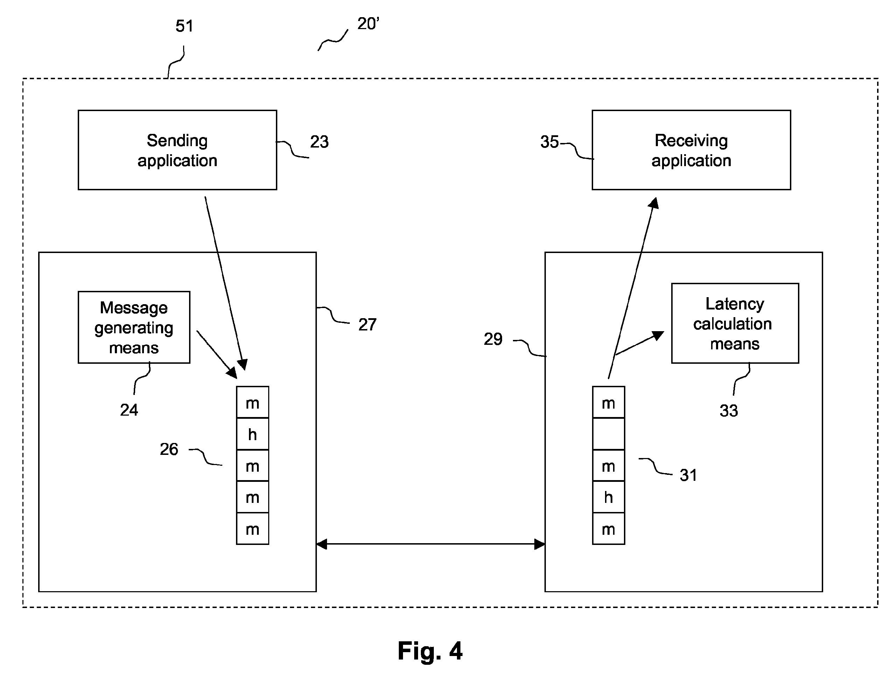

As the skilled man within the art easily realizes, the invention can be used within one single host, i.e. for measuring latency between a sending application and a receiving application within the same host. In Fig. 4, such an example is shown schematically. Like or similar part in Fig. 1 and 4 are denoted with the same reference numerals. As can be seen, both the sending application 23 and the receiving application 35 are arranged within the same host 51. The communication between the sending application 23 and the receiving application is thus performed via an internal network (not shown)

The sending host 21 comprises a multicast framework 27 adapted to provide messages generated by a message generating means 24 to be sent from the sending host 21 to the receiving host 22 with a time stamp indicating the point of time a particular message is sent. This can be performed in accordance with conventional practice within the art. In one embodiment, the message generating means 24 is a heartbeat generator adapted to generate heartbeat messages.

Furthermore, the multicast framework is also adapted to send the message together with the time stamp to a multicast framework 29 of the receiving host 22. The multicast framework 29 of the receiving host 21 comprises a latency calculating means 33. The latency calculating means 33 is, in turn, adapted to extract the time stamp from the received messages when a message is sent to the receiving application 35 and compare the point of time indicated by the extracted time stamp with a current time of the receiving host 22 in order to calculate a latency for the message.

Alternatively, the latency calculating means 33 may be adapted to extract the time stamp only from selected messages, thereby the processing load can be reduced.

In a preferred embodiment, only selected messages, i.e. heartbeats, are provided with time stamps and, thus, the latency calculating means 33 only have to extract the time stamp from these selected messages.

In a preferred embodiment, the multicast framework 27 of the sending host 21 is adapted to provide the selected message with a time stamp indicating the moment the message enters a sending queue 26 of the multicast framework 27 of the sending host 21 since this is the point where a regular message should be sent to the receiving host 22. Moreover, the latency calculating means 33 is adapted to extract the time stamp the moment the selected message leaves a receiving queue 31 of the multicast framework 29 of the receiving host 22 since this is the point where a regular message should be delivered to the receiving application 35.

To ensure that the heartbeats measure the total travel time for a message, including the waiting time in sending queues and receiving queues, the heartbeats are injected into the same message stream as the regular (application) messages. This is shown in the sending queue 26 and the receiving queue 31, where regular messages are indicated with the letter m and the heartbeat with the letter h. In the receiving queue 31, the empty message indicates a sequence gap, i.e. a message has been lost during the transmission. Hence, the heartbeat messages are also sequence-numbered in the same way as regular (application) messages, meaning that if a heartbeat message is lost in the network it will be subject to gap detection and re-transmission in the same way as a regular message. In fact, the message processing logic in the frameworks 27, 29 is unaware of the message content and does not treat heartbeat messages differently than any other message.

Preferably, the sending host 21 and the receiving host 22 are adapted to communicate in order to synchronize an internal clock of the sending host 21 and an internal clock of the receiving host 22 in order to secure an accurate calculation of the latency. In an alternative embodiment, the sending host 21 and the receiving host 22 are adapted to communicate in order to regularly measure a time difference between an internal clock of the sending host 21 and an internal clock of the receiving host 22.

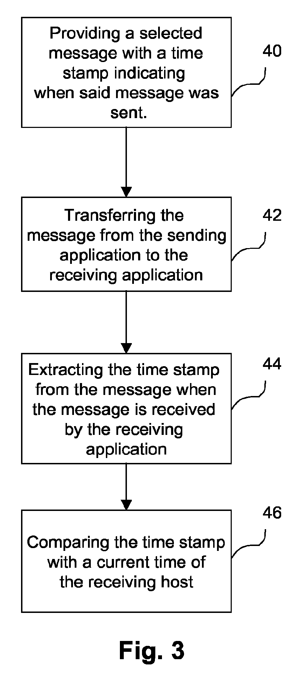

With reference to Fig. 3, the general principles of the method for measuring latency in a multicast environment according to the present invention will be described. First, in step 40, a message to be sent from sending host 21 to the receiving host 22 is provided with a time stamp indicating the point of time the message is sent according to the current time of the sending host 21.

As described above, the message is preferably a heartbeat message. The heartbeat is sequence-numbered and is placed in the sending queue 26. Then, at step 42, the message is transferred together with the time stamp from a multicast framework 27 of the sending host 21 to a multicast framework 29 of the receiving host 22 via the communication network 25. The communication network 25 may be a so called unreliable network in contrast to the multicast frameworks 27, 29 of the sending host 21 and the receiving host 22, respectively. A reliable multicast system is a system where a message is broadcasted to multiple recipients at the same time but where it is also guaranteed that all messages reach the intended recipients in order and without any gaps. Thus, normally, since the messages are sent partly over unreliable networks (i.e. the communication network 25), it can not be guaranteed that all messages reach the intended recipient in due order and messages may be lost in the network during the transmission. However, if a message sent by multicast is lost for some reason, the receiver will detect this and request a re-transmission of that particular message, see Fig. 2 where such a missing message in the sequence is indicated with an empty message box in the receiving queue 31. At receipt at the receiving host 22, the heartbeat is placed in the receiving queue 31 of the multicast framework 29. Subsequently, at step 44, the time stamp is extracted from the heartbeat message when the heartbeat message is received by the receiving application 35 of the receiving host 22. Finally, at step 46, the point of time indicated by the extracted time stamp is compared with a current time of the receiving host 22 in order to calculate a latency for the message.

In the present invention it is accordingly identified when a message actually is sent from the sending application of the sending host and, on the receiving end, when the same message actually is received by the receiving application. Thus, a reliable and accurate approximation of the total latency for a message, i.e. the network latency as well as the latency caused by waiting times in the sending queue and the receiving queue, can be obtained without being affected by network parameters such as the network bandwidth or the quality of the network.

In a preferred embodiment of the present invention, heartbeat messages injected into the same message stream as the application messages are used and these heartbeat messages are subjected to queuing in the sender and the receiver. Moreover, they are also sequence-numbered, which entail that if a heartbeat message is lost in the network it will be subject to gap detection and re-transmission in the same way as regular (application) messages. This is indicated in Fig. 2, where a gap is indicated with an empty message box in the receiving queue 31. In fact, the message processing logic in the frameworks is unaware of the message content and does not treat heartbeats differently than other messages. In one embodiment, the heartbeat messages are sent out at regular intervals, for example, one each second.

In a preferred embodiment, the time stamp indicates the point of time the heartbeat message enters the sending queue 26 and, further, the time stamp is extracted by the latency calculating means 33 when the heartbeat message leaves the receiving queue 31.

Although specific embodiments have been shown and described herein for purposes of illustration and exemplification, it is understood by those of ordinary skill in the art that the specific embodiments shown and described may be substituted for a wide variety of alternative and/or equivalent implementations without departing from the scope of the invention. Those of ordinary skill in the art will readily appreciate that the present invention could be implemented in a wide variety of embodiments, including hardware and software implementations, or combinations thereof. As an example, all functions of the inventive method and the system can be implemented in a server connected to a large number of sending systems and receiving systems. This application is intended to cover any adaptations or variations of the preferred embodiments discussed herein. Consequently, the present invention is defined by the wording of the appended claims and equivalents thereof.

## Claims

1. A method for measuring latency in a computer network system (10, 20) communicating with a plurality of clients (12a, 12b, 12c) by means of multicasting via a communication network (15; 25), said system (10, 20) comprising a sending host (21) including a sending application (23) adapted to distribute messages to a receiving application (35) of a receiving host (22) of a client (12a, 12b, 12c), said method being **characterized by** the steps of:
providing (40) a message to be sent from said sending application (23) to said receiving application (35) with a time stamp indicating the point of time said message was sent;
transferring (42) said message together with said time stamp from a multicast framework (27) of said sending host (21) to a multicast framework (29) of said receiving host (22);
extracting (44) said time stamp from said message when said message is received by a receiving application (35) of said receiving host (22); and
comparing (46) the point of time indicated by said extracted time stamp with a current time of said receiving host (22) in order to calculate a latency for said message.

2. The method according to claim 1, wherein said message is a heartbeat message.

3. The method according to claim 1 or 2, further comprising the step of synchronizing an internal clock of said sending host (21) and an internal clock of said receiving host (22).

4. The method according to claim 1 or 2, further comprising the step of regularly measuring a time difference between an internal clock of said sending host (21) and an internal clock of said receiving host (22).

5. The method according to claim 1, further comprising the step of transferring said message from said sending application (23) to said receiving application (35) at regular intervals.

6. The method according to claim 1, wherein the step of providing (40) comprises the step of providing said message with a time stamp indicating the moment said message enters a sending queue (26) of said multicast framework (27) of said sending host (21).

7. The method according to claim 1 or 6, wherein the step of extracting (44) comprises the step of extracting the time stamp the moment said message leaves a receiving queue (31) of said multicast framework (29) of said receiving host (22).

8. A method for measuring latency in a computer network system (20') comprising a host (51) where at least one sending application (23) communicates with at least one receiving application (35) by means of multicasting, said method being **characterized by** the steps of:
providing (40) a message to be sent from said sending application (23) to said receiving application (35) with a time stamp indicating the point of time said message was sent;
transferring (42) said message together with said time stamp from a first multicast framework (27) to a second multicast framework (29);
extracting (44) said time stamp from said message when said message is received by a receiving application (35); and
comparing (46) the point of time indicated by said extracted time stamp with a current time of said receiving application (35) in order to calculate a latency for said message.

9. The method according to claim 8, comprising any one of the steps in claim 2 or 5.

10. A system for measuring latency in a computer network system (10, 20) communicating with a plurality of clients (12a, 12b, 12c) by means of multicasting via a communication network (25), said system (10, 20) comprising a sending host (21) including a sending application (23) adapted to distribute messages to a receiving application (35) receiving host (22) of a client (12a, 12b, 12c), said system being **characterized in that**
said sending host (21) comprises a multicast framework (27) including a message generating means (24) adapted to generate a message to be sent from said sending application (23) to said receiving application (35) having a time stamp indicating the point of time said message was sent, wherein said framework (27) is adapted to send said message together with said time stamp to a multicast framework (29) of said receiving host (22); and
said receiving host (21) comprises latency calculating means (33) adapted to
extract said time stamp from said message when said message is sent to said receiving application (35); and
compare the point of time indicated by said extracted time stamp with a current time of said receiving host (22) in order to calculate a latency for said message.

11. The system according to claim 10, wherein said message generating means (24) is a heartbeat generator adapted to generate heartbeat messages.

12. The system according to claim 8 or 9, wherein said sending host (21) and said receiving host (22) are adapted to communicate in order to synchronize an internal clock of said sending host (21) and an internal clock of said receiving host (22).

13. The system according to claim 8 or 9, wherein said sending host (21) and said receiving host (22) are adapted to communicate in order to regularly measure a time difference between an internal clock of said sending host (21) and an internal clock of said receiving host (22).

14. The system according to claim 8, wherein said multicast framework (27) of said sending host (21) is adapted to transfer said messages from said sending application (23) to said receiving application (35) at regular intervals.

15. The system according to claim 8, wherein said multicast framework (27) of said sending host (21) is adapted to provide said message with a time stamp indicating the moment said message enters a sending queue (26) of said multicast framework (27) of said sending host (21).

16. The system according to claim 8 or 13, wherein said latency calculating means (33) is adapted to extract the time stamp the moment said message leaves a receiving queue (31) of said multicast framework (29) of said receiving host (22).

17. A system for measuring latency in a computer network system (20') comprising a host (51) where at least one sending application (23) communicates with at least one receiving application (35) by means of multicasting, said method being **characterized in that**
said host (51) comprises a first multicast framework (27) including a message generating means (24) adapted to generate a message to be sent from said sending application (23) to said receiving application (35) having a time stamp indicating the point of time said message was sent, wherein said first framework (27) is adapted to send said message together with said time stamp to a second multicast framework (29); and
said host (51) comprises latency calculating means (33) adapted to
extract said time stamp from said message when said message is sent to said receiving application (35); and
compare the point of time indicated by said extracted time stamp with a current time of said host (51) in order to calculate a latency for said message.

18. The system according to claim 17, wherein said system is adapted in accordance with claim 11 or 14.

19. A computer program product, which when executed on a computer device, performs the steps in accordance with any of claim 1-9.

20. A computer readable medium comprising instructions for bringing a computer to perform steps of the method according to any one of the claims 1-9.
